Europäisches Patentamt

European Patent Office

Office européen des brevets

(19)

(11) Veröffentlichungsnummer: **0 363 630**
**A2**

(12) **EUROPÄISCHE PATENTANMELDUNG**

(21) Anmeldenummer: **89116313.1**

(51) Int. Cl.⁵: **H04J 3/06**

(22) Anmeldetag: **04.09.89**

(30) Priorität: **22.09.88 DE 3832241**
     **05.10.88 DE 3833940**

(43) Veröffentlichungstag der Anmeldung:
     **18.04.90 Patentblatt 90/16**

(84) Benannte Vertragsstaaten:
     **AT BE CH DE ES FR GB GR IT LI LU NL SE**

(71) Anmelder: **Siemens Aktiengesellschaft**
     **Wittelsbacherplatz 2**
     **D-8000 München 2(DE)**

(72) Erfinder: **Ernst, Wolfram, Dipl.-Ing.**
     **Karl-Witthalmstrasse 9**
     **D-8000 München 70(DE)**

(54) **Verfahren zur Neusynchronisation einer Vermittlungsstelle in einem Fernmeldenetz.**

(57) Das Netz ist hierarchisch gerichtet synchronisiert und die einzelnen Vermittlungsstellen besitzen Frequenzüberwachungen für die sie synchronisierenden Referenzfrequenzen, bei deren Ansprechen auf eine andere Referenzfrequenz umgeschaltet wird oder aber ein Übergang in den Freilaufmodus erfolgt. Bei Neusynchronisierung einer dieser Vermittlungsstellen erfolgt die Frequenznachführung von deren zentralem Taktgenerator derart langsam, daß bei nachgeordneten durch diese Vermittlungsstelle synchronisierten Vermittlungsstellen keine Frequenzalarme ausgelöst werden.

FIG 2

Anlaufmodus | Synchronmodus | Freilaufmodus

EP 0 363 630 A2

## Verfahren zur Neusynchronisation einer Vermittlungsstelle in einem Fernmeldenetz

Die Erfindung betrifft ein Verfahren zur Neusynchronisation einer Vermittlungsstelle in einem Fernmeldenetz nach dem Oberbegriff des Anspruchs 1.

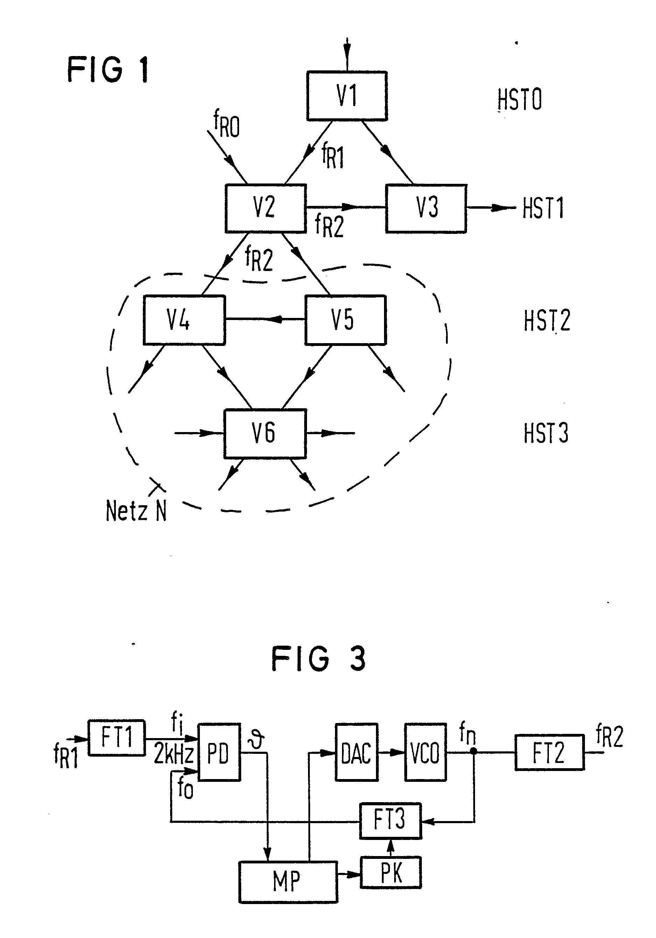

In synchronen Fernmeldenetzen der obengenannten Art erfolgt die Synchronisation der einzelnen Vermittlungsstellen gewöhnlich nach dem hierarchischen Master-Slave-Prinzip über die Digitalsignalverbindungen, wie z.B. in FIG 1 dargestellt. Eine Vermittlungsstelle (z.B. V2) kann dabei sowohl Master-Vermittlungsstelle (Sender der Referenzfrequenz) gegenüber einer oder mehreren ihr eine Hierarchiestufe HST untergeordneten (z.B. V4) , bzw. gleichgeordneten Vermittlungsstellen (z.B. V3) sein, als auchSlave-Vermittlungsstelle (Empfänger der Referenzfrequenz) gegenüber einer oder mehreren ihr eine Hierarchiestufe übergeordneten bzw. gleichgeordneten Vermittlungsstellen (z.B. V1).

Fällt nun in einer Vermittlungsstelle (z.B. V1) die durch deren hochstabilen zentralen Taktgenerator erzeugte hochgenaue Taktversorgung (Amtstakt) aus, so werden die Gruppentaktgeneratoren in den Anschlußgruppen dieser Vermittlungsstelle nicht mehr mit diesem Amtstakt versorgt, worauf sie aufgrund ihrer vergleichsweise geringen Eigenstabilität praktisch schlagartig in ihrer Frequenzgenauigkeit absinken.

Da von diesen Gruppentaktgeneratoren die Referenzfrequenzen (hier $f_{R1}$) für gleich - bzw. eine Hierarchiestufe untergeordnete Vermittlungsstellen (wie z.B. V2) erzeugt werden, sinkt die Genauigkeit der von einer solchen Vermittlungsstelle empfangenen Referenzfrequenz ($f_{R1}$) damit ebenso schlagartig ab.

Um diesen Genauigkeitsverlust (Frequenzabweichung) erkennen zu können, besitzen zentrale Taktgeneratoren von Vermittlungsstellen Frequenzüberwachungen, die die Phasendrift $\phi$ zwischen der empfangenen Referenzfrequenz ($f_{R1}$) und einer Vergleichsfrequenz (Ausgangsfrequenz eines der zwei in einer Vermittlungsstelle (V2) vorhandenen zentralen Taktgeneratoren) zeitlich bewerten, was vereinfacht ausgedrückt bei Überschreiten einer bestimmten Schwelle $\phi_A$ innerhalb eines bestimmten Meßzeitraums (Meßzyklus) zur Auslösung eines Frequenzalarms FA führt. Eine innerhalb eines Meßzyklus konstante Frequenzabweichung $\Delta f = \Delta f_A$ zwischen der Referenzfrequenz und der Vergleichsfrequenz, die eine Phasendrift $\Delta = \phi_A$ hervorruft, kann ebenfalls als (Alarm-)Schwelle $\phi f_A$ bezeichnet werden, ab welcher die Freqzuenzüberwachung eine (konstante) Frequenzabweichung als solche erkennen kann.

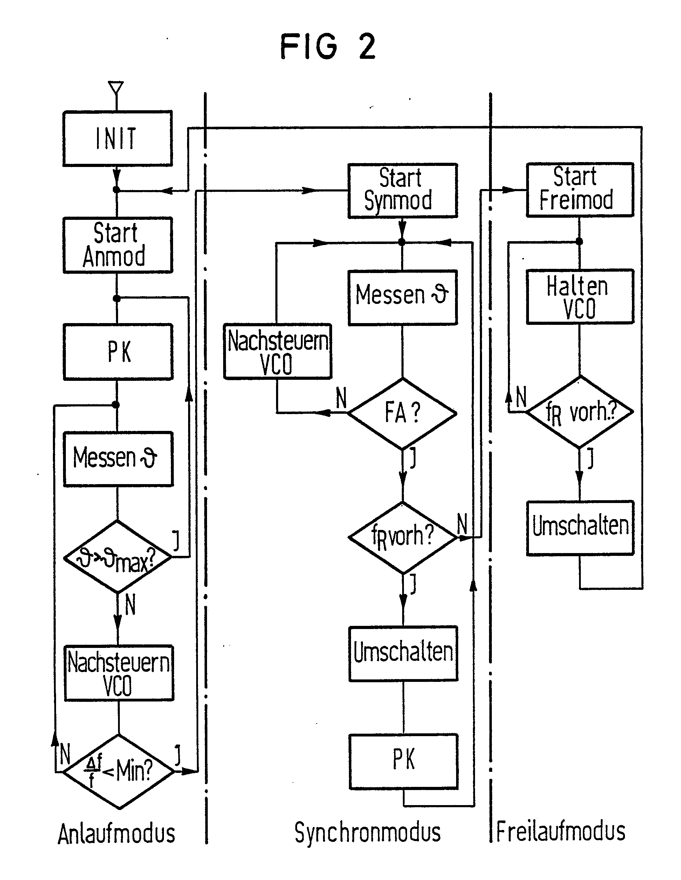

Sind Referenzfrequenz und Vergleichsfrequenz voneinander unabhängig, so wird eine Frequenzdrift der Referenzfrequenz, ob schnell oder langsam, früher oder später eine Frequenzabweichung $\Delta f_A$ und damit einen Frequenzalarm (FA) hervorrufen (siehe FIG 2).

Wird die Vergleichsfrequenz jedoch auf die Referenzfrequenz synchronisiert (z.B. wenn von der betreffenden Vermittlungsstelle nur mehr eine einzige intakte Referenzfrequenz empfangen wird), dann folgt sie der Referenzfrequenz gemäß den Zeitkonstanten des Regelkreises (abhängige Vergleichsfrequenz). Befindet sich der Regelkreis im Synchronmodus, so sind die Zeitkonstanten sehr groß, so daß die Vergleichsfrequenz der Referenzfrequenz im Fall einer raschen Frequenzdrift nicht folgen kann. Es wird sich folglich eine Frequenzabweichung zwischen beiden Frequenzen aufbauen, die bei Überschreiten der Schwelle $\Delta f_A$ zum Frequenzalarm führt, (ist die Frequenzdrift so rasch, daß die bisherige Annahme einer quasikonstanten Frequenzabweichung innerhalb eines betreffenden Meßzyklus nicht mehr erfüllt ist, so bedeutet die Frequenzabweichung $\Delta f_A$ die (Alarm-)Schwelle für die über den Meßzyklus gemittelte Frequenzabweichung).

Im Gegensatz dazu wird die Vergleichsfrequenz der Referenzfrequenz bei einer genügend langsamen Frequenzdrift folgen, so daß die Frequenzabweichung zwischen beiden die Schwelle $\Delta f_A$ für Frequenzalarm nie erreicht.

Es werde nun wieder beispielhaft die Vermittlungsstelle V2 betrachtet und angenommen, daß wegen einer raschen Frequenzdrift der momentanen Referenzfrequenz $f_{R1}$ ein Frequenzalarm ausgelöst wird. Gemäß FIG 2 wird daraufhin geprüft, ob eine andere intakte Referenzfrequenz, nämlich $f_{R0}$ vorhanden ist. Ist dies der Fall, so wird auf diese umgeschaltet.

Ist keine andere Referenzfrequenz vorhanden, geht der zentrale Taktgenerator der Vermittlungsstelle V2 in den Freilaufmodus über, in dem dessen spannungsgesteuerter Oszillator (VCO) mit dem letzten korrekten Stellwert gehalten wird (siehe ebenfalls Telcom Report, 1986, Heft 4, S.263 bis 269).

Im Freilaufmodus sinkt der hochstabile zentrale Taktgenerator einer Vermittlungsstelle (V2) z.B. durch Alterung in seiner Genauigkeit nur sehr langsam, so daß dieses-Absinken von Frequenzüberwachungen der nachgeschalteten Slave-Vermittlungsstellen (siehe z.B. V4, V5 und v6) gemäß den voranstehenden Ausführungen bei abhängiger Vergleichsfrequenz nicht erkannt werden kann.

Deshalb bleiben die zentralen Taktgeneratoren dieser Slave-Vermittlungsstellen weiter im Synchronmodus und das von ihnen gebildete Netz N sinkt in seiner Genauigkeit synchron zur Referenzfrequenz $f_{R2}$ der Master-Vermittlungsstelle V2 ab, ohne daß bei diesen Vermittlungsstellen ein Frequenzalarm ausgelöst wird.

Bleibt nun die Master-Vermittlungsstelle V2 so lange im Freilaufmodus, bis die durch das langsame Absinken der Frequenzgenauigkeit (langsame Frequenzdrift) bedingte Frequenzabweichung der Referenzfrequenz $f_{R2}$ von einem Frequenznormal (ursprünglicher Wert des Amtstaktes $f_{R2}$ der Vermittlungsstelle V2 bei deren Übergang in Freilaufmodus) den Wert $\Delta f_A$ erreicht bzw. überschritten hat (ohne Frequenzalarm auszulösen) und wird zu irgendeinem späteren Zeitpunkt die Master-Vermittlungsstelle V2 (im Anlaufmodus) neu synchronisiert (rasche Frequenzdrift der Referenzfrequenz $f_{R2}$), dann treten in den Slave-Vermittlungsstellen des Netzes N Frequenzalarme auf, die dazu führen, daß diese Vermittlungsstellen in den Freilaufmodus übergehen.

Der Grund dafür, daß die Vermittlungsstelle V2 solange im Freilaufmodus bleibt, kann zum einen auf langzeitigen Ausfall aller Referenzfrequenzen $f_{R0}$, $f_{R1}$ zurückzuführen sein, zum anderen darauf, daß sie im Master-Mode betrieben wird, d.h. als unabhängiges Frequenznormal für das Netz N, dabei aber zu lange nicht gewartet, d.h. nicht nachsynchronisiert wurde.

Der Erfindung liegt die Aufgabe zugrunde, ein in seiner Frequenzgenauigkeit unbemerkt unter die Alarmschwelle abgesunkenes Netz durch die Neusynchronisation ihrer Master-Vermittlungsstelle nachzusynchronisieren, ohne dabei einen Frequenzalarm auszulösen.

Diese Aufgabe wird bei einem gattungsgemäßen Verfahren durch die kennzeichnenden Merkmale des Anspruchs 1 gelöst.

Es folgt eine Liste von den Figuren der Zeichnung.

FIG 1 zeigt die schon erwähnte Netzstruktur zur gerichteten Synchronisation von Vermittlungsstellen nach dem Master-Slave-Prinzip

FIG 2 zeigt ein Flußdiagramm der ebenfalls schon erwähnten Regel-Modi eines zentralen Taktgenerators

FIG 3 zeigt ein Blockschaltbild eines mikroprozessorgesteuerten digitalen Phasenregelkreises in einem zentralen Taktgenerator, der in der erfindungsgemäßen Weise arbeitet.

Bei dem Phasenregelkreis in FIG 3 soll es sich um denjenigen des zentralen Taktgenerators der Vermittlungsstelle V2 handeln, durch den die normierte Ausgangsfrequenz $f_o$ eines spannungs gesteuerten Oszillators VCO auf die normierte Referenzfrequenz $f_i$ synchronisiert wird. Die Normierung der Referenzfrequenz $f_{R1}$ für die Vermittlungsstelle V2 und der Ausgangsfrequenz $f_n$ des spannungsgesteuerten Oszillators erfolgt dabei durch die beiden Frequenzteiler FT1 und FT3. Ein Mikroprozessor MP empfängt die Ausgangssignale (Phasendifferenzen) des Phasendiskriminators PD und ermittelt daraus die (Nach-)Steuerwerte für den spannungsgesteuerten Oszillator. Die Schnittstelle zwischen Mikroprozessor und spannungsgesteuertem Oszillator VCO bildet der Digital-Analog-Converter DAC. Der Frequenzteiler FT2 soll verdeutlichen, daß die von der betreffenden Vermittlungsstelle abgesendete Referenzfrequenz, hier die Referenzfrequenz $f_{R2}$ im Normalfall nichts anderes darstellt, als die herabgeteilte Augangsfrequenz $f_n$ des spannungsgesteuerten Oszillators VCO.

Befindet sich der zentrale Taktgenerator im Freilaufmodus (siehe FIG 2) und kehrt die Referenzfrequenz $f_{R1}$ wieder, so wird der Taktgenerator in den Anlaufmodus gebracht, in dem die Neusynchronisation mit stark verringerten Zeitkonstanten erfolgt, um die Referenzfrequenz $f_{R2}$ möglichst rasch an die Referenzfrequenz $f_{R1}$ herauszuführen. Übersteigt bei diesem Regelvorgang die Phasendifferenz $v$ einen vorgegebenen Maximalwert $v_{max}$ des Meßbereichs, so veranlaßt der Mikroprozessor über den Frequenzteiler FT3 eine Phasenkorrektur PK, durch die die momentane Phasendifferenz zu Null gemacht wird. Diese Phasenkorrektur dient einerseits dem Schutz des Phasendiskriminators gegen Übersteuerung und andererseits der Begrenzung der Phasendrift am Ausgang der Vermittlung.

Die Verbesserung durch die vorliegende Erfindung besteht nun darin, die Referenzfrequenz $f_{R2}$ nur so schnell an die Refererenzfrequenz $f_{R1}$ bzw. ein Frequenznormal heranzuführen, daß kein Frequenzalarm FA im nachgeschalteten Netz N auftritt bzw. das Netz N weiter im Synchronmodus bleibt.

Durch welche Maßnahme diese Aufgabe bspw. verwirklicht werden kann wird im folgenden näher erläutert.

Frequenzüberwachungen basieren auf der Tatsache, daß eine Frequenzabweichung $\Delta f$ eine zeitliche Änderung der Phasenabweichung zur Folge hat ($\Delta f = 2 \frac{d\varphi}{dt}$). Die Tatsache, daß bei Ausfall des zentralen Taktgenerators der Vermittlungsstelle V1 die Frequenzgenauigkeit der Referenzfrequenz $f_{R1}$ wie bereits erläutert, schlagartig absinkt, ermöglicht kurze Überwachungszeiten (Meßzyklen), was im Hinblick auf die Vermeidung einer Fehlregelung des eigenen spannungsgesteuerten Oszillators VCO im zentralen Taktgenerator der Vermittlungsstelle V2 von großer Bedeutung ist. So kann z.B. eine konstante Frequenzabweichung $\Delta f$ von mehr als $2 \times 10^{-8}$ durch eine Phasenabweichung von 2 $\mu s$ in weniger als 100 sec erkannt wird.

Ein langsames Absinken der Frequenzgenauigkeit, z.B. durch Alterung des spannungsgesteuerten Oszillators der Vermittlungsstelle V2 im Freilaufmodus ruft innerhalb desselben Meßzyklusses von 100 sec. keine Phasenabweichung von 2 $\mu s$ hervor

und führt deshalb, wie bereits erwähnt, zu keinem Frequenzalarm FA in den von dieser Vermittlungsstelle synchronisierten Vermittlungsstellen (in FIG 1 das Netz N).

Um bei der Neusynchronisation der in ihrer Frequenzgenauigkeit unter die Alarmschwelle abgesackten Vermittlungsstelle V2 Frequenzalarme in den von dieser Vermittlungsstelle synchronisierten Vermittlungsstellen (Netz N) zu vermeiden, ist im Anlaufmodus des zentralen Taktgenerators der Vermittlungsstelle V2 die Frequenznachführung durch entsprechendes Nachsteuern des spannungsgesteuerten Oszillators VCO also wie folgt zu begrenzen: Liegt die Schwelle, die Frequenzalarm FA auslöst, z.B. bei $2 \times 10^{-8}$ innerhalb eines Meßzyklus von 100 sec., so darf die Frequenznachführung in der MasterVermittlungsstelle V2 in jedem Zeitintervall von 100 sec. nicht mehr als $2 \times 10^{-8}$ betragen. Hat der spannungesteuerte Oszillator VCO in dieser Vermittlungsstelle z.B. einen Ziehbereich von $z = 7 \times 10^{-7}$ und wird er über einen Digital-Analog-Converter DAC mit $n = 16$ bit angesteuert, so beträgt die minimale Steuerschrittweite $\Delta f/f = z/2^n = 1 \times 10^{-11}$. In einem Meßintervall darf die Frequenz also um insgesamt $2 \times 10^{-8}/1 \times 10^{-11} = 2000$ Steuerschritte nachgeführt werden. Bei einem Regelzyklus im Anlaufmodus von 1 sec. ergibt das 20 Steuerschritte pro Zyklus. Eine derartige Steuerung läßt sich mit einem mikroprozessorgesteuerten digitalen Phasenregelkreis (FIG 3) auf einfache Weise realisieren.

**Ansprüche**

1. Verfahren zur Neusynchronisation einer Vermittlungsstelle (V2) in einem Fernmeldenetz, das nach einer Hierarchiestruktur gerichtet synchronisiert ist und dessen Vermittlungsstellen Frequenzüberwachungen besitzen, die einen Genauigkeitsverlust einer Referenzfrequenz erkennen, von der sie momentan synchronisiert werden, um daraufhin, nach Auslösung eines Frequenzalarms (FA), gegebenenfalls auf eine andere intakte Referenzfrequenz umzuschalten, oder andernfalls in den Freilaufmodus überzugehen, **dadurch gekennzeichnet,**
daß die Frequenznachführung eines zentralen Taktgenerators dieser Vermittlungsstelle (V2) so begrenzt wird, daß Frequenzalarme (FA) in den Vermittlungsstellen eines ausschließlich von ihr synchronisierten Netzes (N) vermieden werden.

FIG 1

FIG 3

# FIG 2

INIT

Start Anmod

PK

Messen $\vartheta$

$\vartheta > \vartheta_{max}$? J / N

Nachsteuern VCO

$\frac{\Delta f}{f} < Min$? N / J

Anlaufmodus

Start Synmod

Messen $\vartheta$

Nachsteuern VCO

FA ? N / J

$f_R$ vorh? N / J

Umschalten

PK

Synchronmodus

Start Freimod

Halten VCO

$f_R$ vorh? N / J

Umschalten

Freilaufmodus